# EUROPEAN PATENT APPLICATION

(11) **EP 4 148 696 A1**
(43) Date of publication of application: **15.03.2023**
(21) Application number: 22193863.2
(22) Date of filing: 05.09.2022
(51) Int. Cl.: G07F 19/00, G06Q 20/18, G07D 11/00

(54) **CASH DEPOSITING METHOD AND CASH DEPOSITING SYSTEM**

(30) Priority: 09.09.2021 JP 2021146686
(71) Applicant: GLORY LTD., Himeji-shi Hyogo 670-8567 (JP)
(72) Inventor: TAKEMURA, Junichi, Hyogo, 670-8567 (JP); HIGASHIYAMA, Minoru, Hyogo, 670-8567 (JP); FUKUNISHI, Yuta, Hyogo, 670-8567 (JP)
(74) Representative: Jenkins, Peter David

(57) **Abstract**

Provided is a cash depositing method for a user to deposit cash into an account of the user via a store. The method includes: causing a management server to receive a request for depositing cash into the account from the user, issue a transaction code for specifying the account, and transmit the transaction code to the terminal device; causing a cash handling apparatus in the store to receive the transaction code, recognize and count cash deposited into the apparatus by the user, and output a deposited amount; and causing the management server to specify the account of the user and an account deposit amount to be deposited into the account and instruct a bank server to perform account handling for transferring the account deposit amount from an account of the management company to the account of the user.

## Description

### TECHNICAL FIELD

The present disclosure relates to a cash depositing method and a cash depositing system for a user to deposit cash into an account at a financial institution.

### BACKGROUND ART

Conventionally, a cash-out system has been used in a store. In the cash-out system, a customer in the store can receive cash withdrawn from an account of a financial institution without using an automated teller machine (ATM). While the cash-out system is a system for receiving cash withdrawn from an account, there is a system for depositing cash into the account. For example, Japanese Laid-Open Patent Publication No. 2020-57342 discloses a system which allows a customer of a store to deposit cash into an account. In this system, when a customer purchases an item and pays cash for the item in the store, the customer can deposit change into his/her account, instead of receiving the change by cash.

### SUMMARY

In recent years, there has been an increasing trend of stores being capable of using the cash-out system. In the future, existing ATMs may be removed and the number of ATMs may be reduced. In the conventional cash-out system, however, a user can receive a desired amount of cash withdrawn from an account, but cannot deposit a desired amount of cash into the account. Although the technology described in the above Japanese Laid-Open Patent Publication No. 2020-57342 enables the customer to deposit cash into the account, the customer has to purchase an item in the store and only the change can be deposited into the account. The customer cannot deposit cash into the account in the same manner as with the ATM.

The present disclosure is made in view of the problem, as well as other problems, of the conventional art, and the present disclosure addresses these issues, as discussed here, with a cash depositing method and a cash depositing system which allow a user, in a retail store, to deposit cash into an account at a financial institution.

A cash depositing method according to one aspect of the present disclosure is a method for a user to deposit cash into an account of the user via a store. The method includes: causing a management server managed by a management company to receive a request for depositing cash into the account, from a terminal device operated by the user, issue a transaction code for specifying the account, and transmit the transaction code to the terminal device; causing a cash handling apparatus installed in the store to receive the transaction code that the user has received with the terminal device, recognize and count cash deposited by the user into the cash handling apparatus, and output a deposited amount of the cash; and causing the management server to specify the account of the user and an account deposit amount to be deposited into the account, based on the transaction code and the deposited amount obtained in the cash handling apparatus, and instruct a bank server to perform account handling for transferring the account deposit amount from an account of the management company to the account of the user. The objects, features, advantages and technical and industrial significance of this disclosure will be better understood by the following description and the accompanying drawings of the disclosure.

### BRIEF DESCRIPTION OF THE DRAWINGS

FIG. 1 is a block diagram showing an example of a configuration of a cash depositing system according to the present embodiment;
FIG. 2 is a schematic diagram showing a flow of processes performed in the cash depositing system;
FIG. 3 is a schematic diagram showing a flow of processes, different from FIG. 2, performed in the cash depositing system;
FIGS. 4A and FIG. 4B show examples of pieces of information managed by a management server; and
FIG. 5 shows an example of benefit information announced to customers in a store.

### DESCRIPTION OF EMBODIMENTS

Hereinafter, a cash depositing method and a cash depositing system according to the present disclosure will be described with reference to the accompanying drawings. A user of the cash depositing system of the present disclosure can deposit cash into his/her account at a financial institution when the user is in a store, without using an automatic teller machine (ATM). Examples of the store where the user can perform depositing of cash include retail stores such as a grocery store and a convenience store. Cash to be deposited by the user may be only banknotes, only coins, or both banknotes and coins.

An outline of handling performed in the cash depositing system is as follows. First, the user of the cash depositing system deposits, at a retail store, cash that the user wants to deposit into his/her account. This cash is deposited into a cash handling apparatus installed in the store. The cash handling apparatus recognizes and counts the cash to obtain a deposited amount. Thereafter, an account deposit amount, which is an amount of cash to be deposited into the account of the user, is determined, and movement of a fund equivalent to the account deposit amount from the store to a management company is performed. The account deposit amount may be the deposited amount into the cash handling apparatus, or an amount obtained by subtracting, from the deposited amount, a handling fee to be paid by the user. For example, the management company can obtain the fund equivalent to the account deposit amount from the store when the store makes a money transfer from an account of the store to an account of the management company. For another example, the management company can obtain the fund equivalent to the account deposit amount from a source of funds that the management company receives in advance from the store. Subsequently, account handling for moving the fund equivalent to the account deposit amount from the account of the management company to the account of the user, is performed. The account handling can be performed when a management server managed by the management company instructs a server of the financial institution to perform the account handling. As a result, the balance on the account of the user is increased by the account deposit amount. It leads to the same result as in the case where the user deposits the cash into the account by using an ATM.

The place where the user deposits cash is not limited to a store, and may be any facility such as a station. In this embodiment, the cash depositing method and the cash depositing system will be described for the case where the place is a retail store selling items to customers. Although the financial institution and the account type are also not particularly limited, a bank account is adopted in this embodiment.

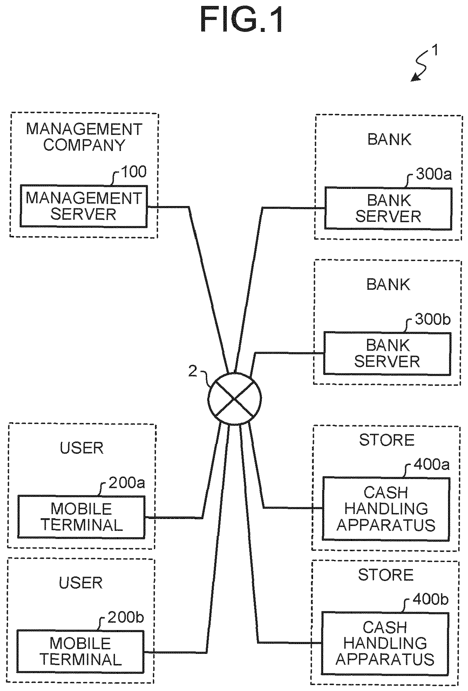

FIG. 1 is a block diagram showing an example of a configuration of a cash depositing system 1 according to the present embodiment. The cash depositing system 1 includes a management server 100, mobile terminals 200 (200a, 200b), bank servers 300 (300a, 300b), and cash handling apparatuses 400 (400a, 400b).

The management server 100, the mobile terminals 200, the bank servers 300, and the cash handling apparatuses 400 are communicable with each other via a network 2. The type of the network 2 is not particularly limited, and may be an Internet network or a dedicated network.

FIG. 1 shows two users, two stores, and two banks, but the numbers thereof are not particularly limited. The number of the mobile terminals 200, the cash handling apparatuses 400, and the bank servers 300 may be one, or three or more. In the example shown in FIG. 1, one cash handling apparatus 400 is installed in each store, but a plurality of cash handling apparatuses 400 may be installed in each store.

The management server 100 is installed in a management company that manages the cash depositing system 1. The management company manages the cash depositing system 1 by operating the management server 100. For example, a computer device operable by using an operation terminal can be used as the management server 100. For another example, a computer device including an operation unit and a display unit can be used as the management server 100.

Each mobile terminal 200 is a portable communication terminal possessed by the user of the cash depositing system 1. The type of the communication terminal is not particularly limited. For example, a smartphone or a tablet computer is used as the mobile terminal 200. The user can perform a process for depositing cash into his/her bank account by using the mobile terminal 200.

Each bank server 300 is installed in a bank. The bank server 300 performs account handling for moving funds between a plurality of bank accounts.

Each cash handling apparatus 400 is installed in a store. The cash handling apparatus 400 includes: an operation unit that receives operations related to instructions and settings; a display unit that displays various types of information; a reading unit that reads information from the mobile terminal 200; and a cash handling unit that receives, recognizes and counts deposited cash and outputs a deposited amount of the cash.

The cash handling apparatus 400 receives cash to be deposited, recognizes and counts the cash, and obtains a deposited amount of the cash. The cash handling apparatus 400 stores the recognized and counted cash, for each denomination, into storage units disposed inside the apparatus. The cash handling apparatus 400 may be able to dispense cash stored in the storage units, upon receiving information indicating the denomination and quantity of cash to be dispensed.

The configuration of the cash handling apparatus 400 is not particularly limited as long as cash can be deposited into the cash handling apparatus 400 and a deposited amount can be obtained. For example, a change machine, which is connected to a cash register to receive money from customers and dispense change to be returned to the customers, may function as the cash handling apparatus 400. A self-checkout machine or a semi-self-checkout machine used for checkout in the store may function as the cash handling apparatus 400. A vending machine used for selling items in the store may function as the cash handling apparatus 400. An automatic settlement machine used for payment of utility fees or the like in the store may function as the cash handling apparatus 400. A money changer, which is a machine that allows customers to change denominations of money in the store, may function as the cash handling apparatus 400. Since the cash handling apparatus 400, which receives, recognizes and counts the deposited cash, and outputs a deposited amount, has conventionally been known, detailed description thereof is omitted.

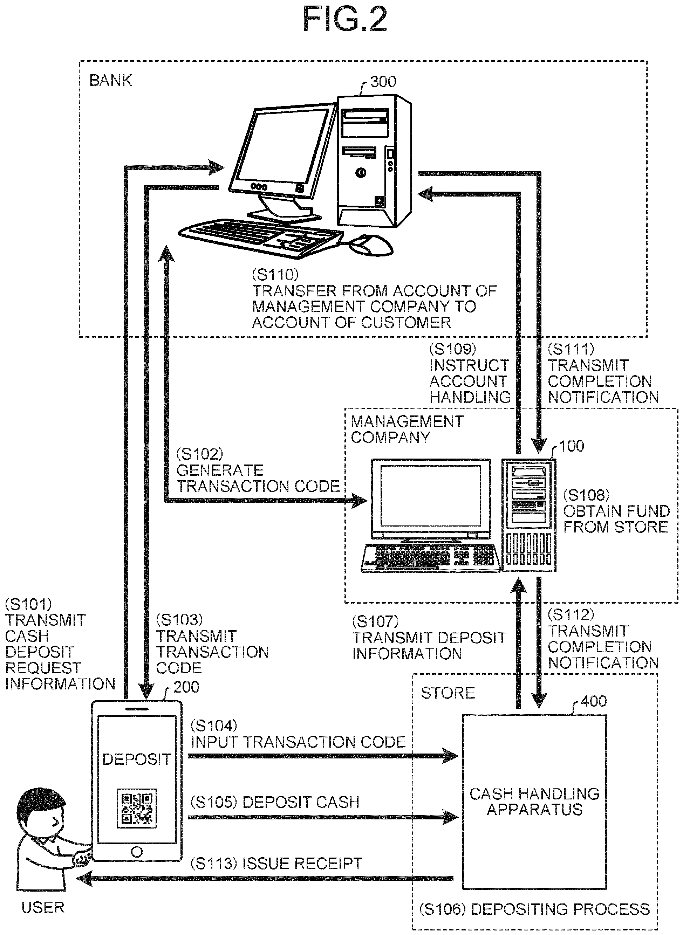

Next, handling processes performed in the cash depositing system 1 will be described. FIG. 2 schematically shows a flow of processes performed in the cash depositing system 1. The user starts a dedicated application on the mobile terminal 200, and performs an operation of requesting a cash deposit. In the application running on the mobile terminal 200, the user need not input the amount of cash that the user wants to deposit into a bank account of the user, and only needs to input account information for specifying the bank account. The mobile terminal 200 transmits cash deposit request information including the account information to the bank server 300 (step S101).

The contents of the cash deposit request information and the account information are not particularly limited as long as the bank server 300 can identify the bank account into which the user deposits cash. For example, the account holder name and the account number, which are inputted to the mobile terminal 200 by the user, may be transmitted to the bank server 300. For another example, in a case where user ID, password, and account information of each user have been registered in the bank server 300 in advance, the user ID and the password inputted to the mobile terminal 200 by the user may be transmitted to the bank server 300. In this case, the bank server 300 can identify the bank account of the user, based on the user ID and the password.

After identifying, based on the cash deposit request information, the bank account into which the user deposits cash, a transaction code is generated by the bank server 300 and the management server 100 (step S102). For example, the bank server 300 transmits, to the management server 100, information such as the account number, the reception date and time of the cash deposit request information, and the like. The management server 100 generates a transaction code that can identify each transaction to be performed in the store, and transmits the transaction code to the bank server 300. For example, the management server 100 encodes the information including the account number and the reception date and time of the cash deposit request information, thereby generating a graphic code such as a bar code or a two-dimensional code to be used as the transaction code. The content of the transaction code is not particularly limited as long as it can be used for specifying a transaction. For example, a character string may be used as the transaction code.

The bank server 300 transmits the transaction code to the mobile terminal 200 (step S103). The user inputs the transaction code received by the mobile terminal 200, into the cash handling apparatus 400 (step S104). The mobile terminal 200 displays the transaction code on a screen, and the cash handling apparatus 400 reads the transaction code by a reading device. For example, the user presents, to a clerk, the transaction code displayed on the screen of the mobile terminal 200, and the clerk causes the cash handling apparatus 400 to read the transaction code by using the reading device such as a scanner connected to the cash handling apparatus 400.

The method for inputting the transaction code is not particularly limited. For example, the user may manually input the transaction code consisting of a character string by operating the operation unit included in the cash handling apparatus 400. The cash handling apparatus 400 may obtain the transaction code by communicating with the mobile terminal 200. For example, the cash handling apparatus 400 and the mobile terminal 200 may exchange the transaction code by using a short-range wireless communication technology such as Bluetooth (Registered Trademark) or NFC (Near Field Communication).

The processes for inputting the transaction code and transmitting the cash deposit request information may not necessarily be performed by using the mobile terminal 200. These processes may be performed by using an operation/display unit included in the cash handling apparatus 400, or may be performed by using an operation terminal connected to the cash handling apparatus 400.

After obtaining the transaction code, the cash handling apparatus 400 changes its operation mode to an account deposit mode to receive cash to be deposited into the bank account. The user deposits, into the cash handling apparatus 400, cash to be deposited into the bank account (step S105). The cash handling apparatus 400 performs a depositing process in the account deposit mode to obtain a deposited amount (step S106). The cash handling apparatus 400 recognizes and counts the cash deposited by the user to obtain a total amount of the deposited cash as a deposited amount. For example, when the user deposits a large number of coins, the cash handling apparatus 400 recognizes each coin to obtain a deposited amount that is a total amount of coins deposited into the apparatus. The cash handling apparatus 400 transmits, to the management server 100, deposit information including the deposited amount and the transaction code (step S107) .

After the deposited amount has been obtained in the cash handling apparatus 400, an account deposit amount to be deposited into the bank account of the user is determined. For example, if the user need not pay a handling fee to the store, the management server 100 determines that the deposited amount is the account deposit amount. When the user needs to pay a handling fee to the store, the management server 100 determines that an amount obtained by subtracting the handling fee from the deposited amount is the account deposit amount. The management server 100 can manage the amount of the handling fee by using store information, which will be described later.

The management server 100 performs a process of obtaining, for the management company, a fund equivalent to the account deposit amount from the store (step S108). For example, the management server 100 performs a transfer process of moving the fund equivalent to the account deposit amount from the bank account of the store to the account of the management company, so that the management company obtains the fund from the store. For another example, the management server 100 performs a process of subtracting the account deposit amount from a deposit that has been received from the store in advance as a source of funds, so that the management company obtains the fund from the store. The process in step S108 may not necessarily be performed each time the depositing process is performed in the cash handling apparatus 400. For example, after a plurality of depositing processes have been performed in the store, the account deposit amounts may be summed up, and a fund equivalent to a total amount of the account deposit amounts may be moved, which will be described later.

The management server 100 transmits, to the bank server 300, information indicating the account deposit amount and the bank account of the user, and instructs the bank server 300 to perform account handling (step S109). The bank server 300 performs a transfer process of moving the fund equivalent to the account deposit amount, from the account of the management company to the account of the user (step S110). Thus, the balance on the bank account of the user is increased by the account deposit amount.

The bank server 300 transmits a transfer process completion notification to the management server 100 (step S111). The management server 100 transmits the transfer process completion notification to the cash handling apparatus 400 (step S112). The cash handling apparatus 400 issues a receipt indicating that the account handling has been completed (step S113). If the store takes no handling fee from the user, information printed on the receipt includes the deposited amount obtained in the cash handling apparatus 400, and the account deposit amount deposited into the bank account of the user. If the store takes a handling fee from the user, information printed on the receipt includes the deposited amount obtained in the cash handling apparatus 400, the handling fee, and the account deposit amount deposited into the bank account of the user. The information printed on the receipt may further include at least one of date and time of the depositing process, date and time of the account handling, the account holder name, and the account number.

A paper receipt on which the information is printed may be issued, or the content of the receipt may be transmitted from the cash handling apparatus 400 to the mobile terminal 200 and displayed on the screen of the mobile terminal 200 as an electronic receipt. Issuance of the receipt is optional, and therefore, step S113 may be omitted. In this case, the user may check an increase in the balance on the bank account, by using, for example, a mobile banking service offered by the bank.

In FIG. 2, the cash deposit request information, with which the user requests a cash deposit into his/her bank account, is transmitted to the bank server 300. Alternatively, the cash deposit request information may be transmitted to the management server 100.

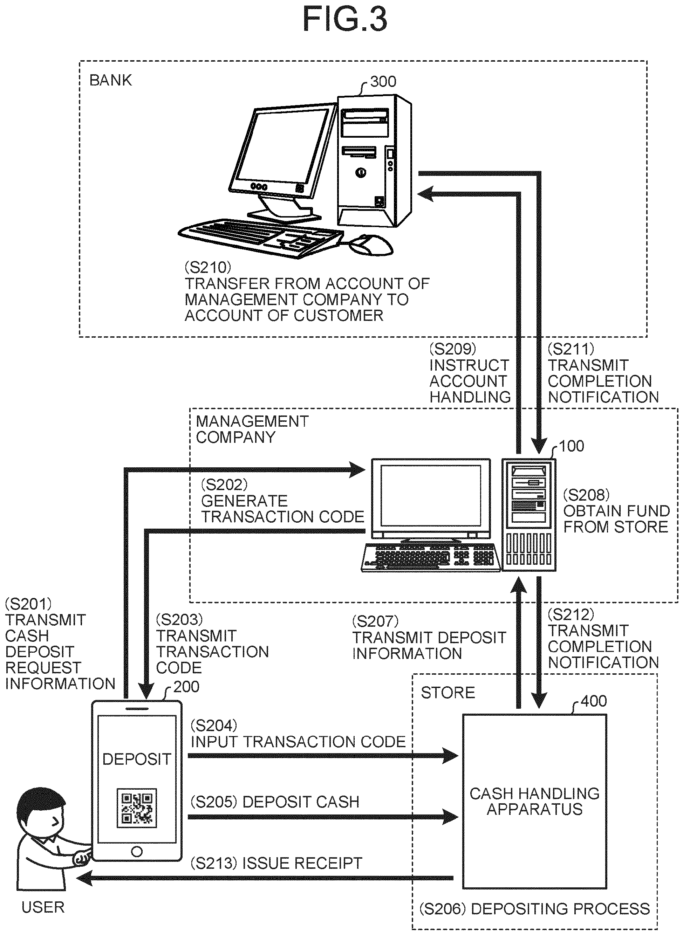

FIG. 3 schematically shows a flow of processes, different from FIG. 2, performed in the cash depositing system 1. When the user has requested a cash deposit by operating the mobile terminal 200, the mobile terminal 200 transmits, to the management server 100, cash deposit request information including account information (step S201). As in the case of FIG. 2, the management server 100 generates a transaction code based on the cash deposit request information (step S202). The management server 100 transmits the transaction code to the mobile terminal 200 (step S203). Thereafter, the same processes as those in steps S104 to S113 shown in FIG. 2 are performed. Since the processes in steps S204 to S213 shown in FIG. 3 are the same as those in steps S104 to S113 shown in FIG. 2, repeated description is omitted.

Also, in the case where the management server 100 receives the cash deposit request information from the user and generates the transaction code that can specify a transaction with the user, the user can deposit cash into his/her bank account by depositing cash into the cash handling apparatus 400 in the store, in the same way as in the case of FIG. 2. The management server 100 can selectively perform the processes shown in FIG. 2 or FIG. 3 according to the function and operation of the bank server 300.

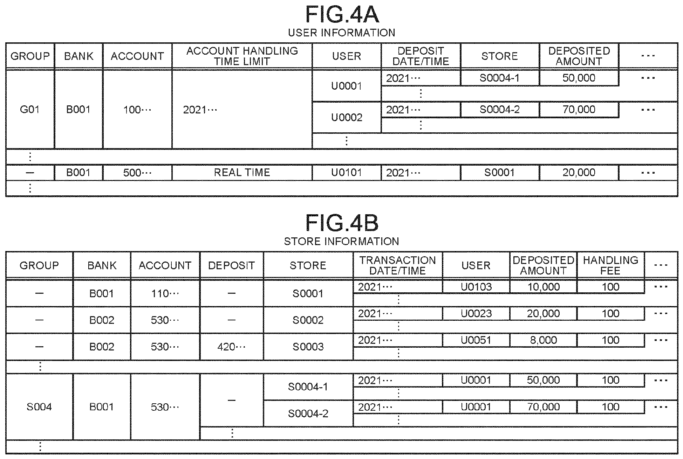

Next, information managed by the management server 100 will be described. The management server 100 can manage information on users, information on stores, and information on deposit transactions in which the users deposited cash at the stores. FIG. 4A and FIG. 4B show examples of pieces of information managed by the management server 100. Specifically, FIG. 4A shows an example of the user information, and FIG. 4B shows an example of the store information.

As shown in FIG. 4A, the user information includes, registered therein, information on a bank account of each user, and information on each deposit transaction performed by each user in a store. Based on the user information, the management server 100 can identify the bank account of each user who performed the deposit transaction. Moreover, based on the user information, the management server 100 can identify an amount of cash deposited by each user, a store at which each user deposited the cash, and a date and time that each user deposited the cash at the store. That is, the management server 100 can identify when each user deposited how much amount of cash into a cash handling apparatus 400 of which store.

The user information may include, registered therein, a group associated with a plurality of users. FIG. 4A shows an example in which a plurality of users including a user whose user ID is "U0001" and a user whose user ID is "U0002" belong to a group managed by a group ID of "G01", while a user whose user ID is "U0101" does not belong to any group.

For example, a plurality of users who belong to the same company are associated with each other by a group ID. The management server 100 can collectively handle the deposit transactions performed by the users belonging to the same group.

For example, a store D includes a first branch having a store ID of "S0004-1" and a second branch having a store ID of "S0004-2". It is assumed that when a user who belongs to a company having a group ID of "G01" deposits cash into the bank account via a branch of the store D, the store D does not take a handling fee from the user. In the example shown in FIG. 4A, a user whose user ID is "U0001" has deposited 50,000 JPY at the first branch of the store D whose store ID is "S0004-1", and a user whose user ID is "U0002" has deposited 70,000 JPY at the second branch of the store D whose store ID is "S0004-2". In this case, the management server 100 can collectively handle these two transactions at one time.

Specifically, instead of performing two times of handling, i.e., moving a fund of 50,000 JPY and moving a fund of 70,000 JPY from the store D to the management company, the management server can move a fund of 120,000 JPY, which is a total amount of 50,000 JPY and 70,000 JPY, through one time of handling. Moreover, instead of instructing two times of account handling, i.e., moving a fund of 50,000 JPY and moving a fund of 70,000 JPY from the bank account of the management company to the bank account of the company whose group ID is "G01", the management server 100 can instruct the bank server 300 to move a fund of 120,000 JPY, which is a total amount of 50,000 JPY and 70,000JPY, through one time of account handling between these two bank accounts.

In a case where the store takes a handling fee from each user, fund movement is performed based on a total amount of each account deposit amounts which have been obtained by subtracting the handling fees from deposited amounts. The management server 100 can associate the account deposit amounts of cash, which have been deposited by the respective users into one or more cash handling apparatuses 400 of one or more stores, with the bank accounts of the users in order to manage the account deposit amounts. The management server 100 calculates a total amount of a plurality of account deposit amounts being associated with the same bank account, and moves a fund equivalent to the total amount, thereby collectively handling a plurality of transactions. The fund movement for the plurality of transactions may include a fund movement of a total amount from the store to the management company and/or a fund movement of a total amount from the management company to the users.

When collectively handling a plurality of transactions, the management server 100 calculates a total amount of deposit amounts or account deposit amounts, and performs a process of moving a fund of the total amount between the store and the management company and/or between the management company and the users, once a day at a predetermined time, for example. Alternatively, the management server 100 may calculate a total amount of funds to be moved and perform a process of moving a fund of the total amount, once a month. The fund movement between the store and the management company and the fund movement between the management company and the users may not necessarily be performed at the same timing, and may be performed at different timings. The management server 100 can perform the fund moving process between the store and the management company at a timing set in advance for each store, and perform the fund moving process between the management company and the users at a timing set in advance for each user.

For example, as shown in FIG. 4A, the user information may include an item of "account handling time limit", and the management server 100 may collectively handle a plurality of transactions, based on the account handling time limit. The account handling time limit may be a time limit determined in advance for each group or each user, such as "morning of date of depositing process", "date of depositing process", "weekend", or "end of month". The management server 100 can perform the account handling for moving the fund between the bank account of the management company and the bank accounts of the users, based on the account handling time limit registered in the user information.

For another example, each user may designate an account handling time limit when performing a depositing process at a store. For example, the user can designate an account handling time limit by operating the mobile terminal 200 at step S101 in FIG. 2 or step S201 in FIG. 3. The management server 100 may manage the account handling time limit designated by the user, and perform an account handling for moving a fund between the bank account of the management company and the bank account of the user, based on the designated account handling time limit.

For example, if the time limit designated by a plurality of users who belong to the group ID of "G01" is "morning of date of depositing process", the management server 100 performs fund movement regarding the corresponding transactions performed by the users of the group "G01" at a predetermined time in the morning of the date of depositing process, e.g., a.m. 11:30. For another example, if the time limit set in advance for the plurality of users who belong to the group ID of "G01" is "end of month", the management server 100 collectively performs the fund movement regarding the corresponding transactions at the end of the month.

The management server 100 can manage the store information as shown in FIG. 4B. The store information includes, registered therein, information on the bank account of each store, and information on deposit transactions performed in each store. The management server 100, based on the store information, can identify the bank account of each store that performed a deposit transaction with a user. Moreover, the management server 100, based on the store information, can identify an amount of cash that each store received from each user, a user who deposited the amount of cash at each store, and a date and time that each store received cash from the user. That is, the management server 100 can identify when the cash handling apparatus 400 of each store received how much amount of cash from which user.

In a case where the management company has received in advance a deposit from a store and uses this deposit as a source of funds to be moved from the store to the management company, the management server 100 manages the balance of the deposit at an item of "deposit" shown in FIG. 4B. When the amount of the deposit from the store has become equal to or smaller than a predetermined threshold, the management server 100 notifies the clerk of the store of the same. For example, the management server 100 transmits, to a terminal device used by the clerk, notification indicating the reduction in the amount of the deposit. Upon receiving the notification, the clerk checks the amount of the deposit and takes a countermeasure to increase the amount. Examples of the clerk who receives the notification include a manager and a person in charge of the store.

As shown in FIG. 4B, the store information includes an item of "handling fee". When a store takes a handling fee from each user, the amount of the handling fee is registered under the item of "handling fee". The handling fee may be a preset fixed amount, or may be changed according to the amount of cash that each user deposited at the store, i.e., the amount of cash deposited into the cash handling apparatus 400. For example, when the handling fee is changed according to the deposited amount, a preset handling fee rate may be registered under the item of "handling fee". The handling fee may vary among stores. The management server 100 can calculate an account deposit amount, with the handling fee of each store being stored in the store information. Specifically, when a store takes a handling fee from each user, the management server 100 subtracts the handling fee to be paid by the user, from the amount of cash deposited into the cash handling apparatus 400 by the user, and regards the resultant amount as the account deposit amount.

Each store can restrict the content of the depositing process in the account deposit mode to be performed in the cash handling apparatus 400 in the store. For example, the clerk inputs a transaction restraint by operating the operation unit of the cash handling apparatus 400 and causes the cash handling apparatus 400 to store the transaction restraint. When performing the depositing process in the account deposit mode, the cash handling apparatus 400 performs the depositing process based on the transaction restraint.

When the transaction restraint has been set, the cash handling apparatus 400 may announce the transaction restraint to the customers in the store by displaying the transaction restraint on the display unit. Additionally, the management server 100 may obtain information on the transaction restraint from the cash handling apparatus 400, and announce the transaction restraint to the user by displaying it on the display unit of the mobile terminal 200 that is used for transmitting the cash deposit request information at step S101 in FIG. 2 or step S201 in FIG. 3.

The clerk can set the transaction restraint to limit the denomination of cash, which can be deposited into the cash handling apparatus 400 in the account deposit mode, to one or a plurality of denominations. For example, when the clerk limits the denomination of cash that can be deposited into the cash handling apparatus 100, to 1,000-JPY notes, the cash handling apparatus 400 recognizes the cash deposited by the user in the account deposit mode, rejects cash other than 1,000-JPY notes and discharges the rejected notes from the apparatus, and obtains a total amount of 1,000-JPY notes as a deposited amount. For another example, when the clerk limits the denomination of cash that can be deposited into the cash handling apparatus 400, to only coins, the cash handling apparatus 400 in the account deposit mode does not accept deposited banknotes and accepts only deposited coins, and obtains a total amount of coins as a deposited amount. The store may set an upper limit amount of cash to be received in trust from each user. When the clerk sets the upper limit amount, the cash handling apparatus 400 rejects cash exceeding the upper limit amount and returns the rejected cash to the user.

The transaction restraint set by the clerk is applied only to a depositing process in the account deposit mode. For example, when the cash handling apparatus 400 is an apparatus used for checkout in an item transaction with the customer, a depositing process for checkout is performed irrespectively of the transaction restraint. For example, when the denomination of cash that can be deposited in the account deposit mode is limited to coins, the cash handling apparatus 400 does not accept deposited banknotes in the depositing process during the account deposit mode, but accepts deposited banknotes during the depositing process for checkout.

The cash handling apparatus 400 may automatically set the transaction restraint, based on an inventory quantity of cash in the apparatus 400. For example, the store may use cash, which has been deposited by the user into the cash handling apparatus 400 during the account deposit mode, as change to be dispensed from the cash handling apparatus 400 and returned to a customer for an item transaction with the customer. The clerk may set a threshold for each denomination of cash to be used as change, and cause the cash handling apparatus 400 to store the threshold. The cash handling apparatus 400 manages, as inventory quantities, denominations and the quantity for each denomination of cash being stored in the apparatus. The cash handling apparatus 400 specifies a denomination of which the inventory quantity has become equal to or smaller than the threshold set by the clerk in advance. When receiving cash to be deposited during the account deposit mode, the cash handling apparatus 400 can limit the cash that can be deposited, to the specified denomination, i.e., a denomination of which the quantity in the apparatus has become equal to or smaller than the threshold. Consequently, cash of other denominations are not accepted in the depositing process during the account deposit mode and rejected from the cash handling apparatus 400.

The cash handling apparatus 400 can announce, to the customers in the store, information on the denomination that can be deposited in the account deposit mode, by displaying the relevant information on the display unit. Additionally, the cash handling apparatus 400 can manage benefits to be given to a customer who has deposited cash in the account deposit mode. The cash handling apparatus 400 can announce the benefits to the customers by displaying the relevant information on the display unit.

The clerk can set in advance which benefit is to be given in what situation, and cause the cash handling apparatus 400 to store the same as setting information. The clerk can set the content of the benefit to be given to the user. For example, points, which can be used for payment for an item when the user purchases the item in the store, are given as a benefit. The cash handling apparatus 400 announces the content of the benefit to the customers, based on the setting information on the benefit prepared in advance.

The cash handling apparatus 400 may not necessarily determine the content of the benefit automatically based on the setting content prepared in advance, and the clerk may manually determine the content of the benefit by operating the cash handling apparatus 400. For example, the clerk can check the details of the inventory quantity of cash in the cash handling apparatus 400 by operating the apparatus 400, and determine the content of the benefit to be given to a customer according to the denomination of cash received in trust from the customer.

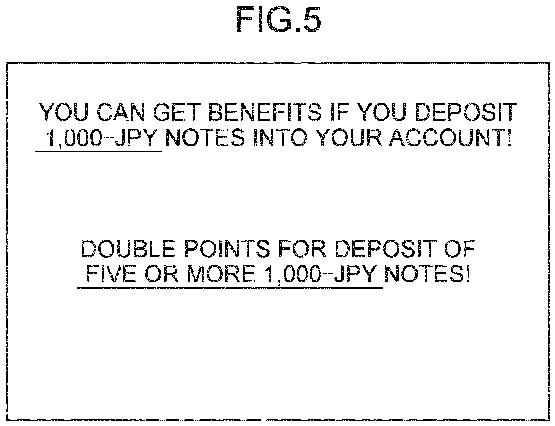

FIG. 5 shows an example of the benefit information announced to the customers in the store. The benefit information shown in FIG. 5 is displayed on the display unit of the cash handling apparatus 400. Information indicating the denomination of cash that the customers can deposit in the account deposit mode, and information indicating the content of the benefit that the customers can get by depositing cash, are displayed on the display unit.

In the example shown in FIG. 5, information that gives the customers an incentive to deposit 1,000-JPY notes, is displayed. Additionally, information indicating that a customer who has deposited a predetermined number or more of 1,000-JPY notes is given a higher benefit than the other customers, is displayed. The clerk sets the benefit according to the denomination and quantity (amount) of cash that the store receives in trust from the customer, and the cash handling apparatus 400 can announce the content of the set benefit to the customers.

As described above, the information on the benefit that the user can get by depositing, at the store, cash to be deposited into his/her bank account, is displayed on the display unit of the cash handling apparatus 400, whereby the customers of the store are given an incentive to deposit cash at the store.

The information on the benefit may be displayed on a display unit of an apparatus other than the cash handling apparatus 400 installed in the store. The information on the benefit may be announced to the users of the cash depositing system 1 through e-mails, SNS (Social Networking Service), an application of the mobile terminal 200, a website operated by the store, etc.

For example, the cash handling apparatus 400 transmits, to the management server 100, information including: a denomination for which the store gives the benefit to the users; and the content of the benefit. For example, the management server 100 may transmit information that can be used for specifying the store and the information shown in FIG. 5 to the mobile terminals 200 of the users through e-mails. For another example, the management server 100 may perform announcement to the users by means of posting through an SNS, disclosure on a website, or notification through an application. Each user displays the announced information on the mobile terminal 200, and confirms the store, the denomination of cash for which the benefit can be obtained from the store, and the content of the benefit. The user, based on the information displayed on the mobile terminal 200, goes to the store and performs a deposit transaction of depositing, at the store, cash to be deposited into his/her bank account, whereby the user can obtain the benefit. The content of the benefit that the user receives is not limited to points that are available for payment for items that the user purchases in the store. For example, the benefit may be a coupon that is available in the store, or a small gift from the store.

The components of the cash depositing system 1 according to the present embodiment are conceptually functional components, and thus may not necessarily be physically limited thereto. The management server 100 may implement a part or the entirety of the function and operation of the cash handling apparatus 400. The cash handling apparatus 400 may implement a part or the entirety of the function and operation of the management server 100. The management server 100 may implement a part or the entirety of the function and operation of the bank server 300. The bank server 300 may implement a part or the entirety of the function and operation of the management server 100. Distributed or integrated forms of each device are not limited to the forms described above, and all or some of the forms may be distributed or integrated functionally or physically in any unit depending on various loads, use statuses, or the like.

A cash depositing method according to the present disclosure is a method for a user to deposit cash into an account of the user via a store. The method includes: causing a management server managed by a management company to receive a request for depositing cash into the account, from a terminal device operated by the user, issue a transaction code for specifying the account, and transmit the transaction code to the terminal device; causing a cash handling apparatus installed in the store to receive the transaction code that the user has received with the terminal device, recognize and count cash deposited by the user into the cash handling apparatus, and output a deposited amount of the cash; and causing the management server to specify the account of the user and an account deposit amount to be deposited into the account, based on the transaction code and the deposited amount obtained in the cash handling apparatus, and instruct a bank server to perform account handling for transferring the account deposit amount from an account of the management company to the account of the user.

The above method may further include, causing the bank server to perform a process of transferring the account deposit amount from the account of the management company to the account of the user, based on the instruction received from the management server.

In the above configuration, the transaction code may be a two-dimensional code, and the cash handling apparatus may obtain the transaction code by reading the two-dimensional code displayed on a display unit of the terminal device.

In the above configuration, the terminal device may be a mobile terminal possessed by the user, and the cash handling apparatus may obtain the transaction code by communicating with the mobile terminal.

In the above configuration, the management server may manage account deposit amounts, which have been obtained when a plurality of cash handling apparatuses receive cash from users, in association with the accounts of the respective users, calculate a total amount by summing up a plurality of account deposit amounts associated with the same account, and instruct to perform the account handling for the total amount, such that the plurality of account deposit amounts are handled collectively by moving, in the one account handling, a fund equivalent to the total amount.

The above method may further include causing the management server to obtain information indicating a time limit of execution of the account handling. The management server collectively handles the plurality of account deposit amounts having been obtained by the time limit.

A cash depositing system according to the present disclosure is a system for a user to deposit cash into an account of the user via a store. The system includes: a cash handling apparatus configured to receive a transaction code for specifying the account of the user, from a terminal device operated by the user, recognize and count cash deposited by the user, and output a deposited amount of the cash; and a management server configured to specify the account of the user and an account deposit amount to be deposited into the account, based on the transaction code and the deposited amount obtained from the cash handling apparatus, and instruct a bank server to perform account handling for transferring the account deposit amount from an account of a management company that provides the cash depositing system, to the account of the user.

As described above, the user of the cash depositing system according to the present embodiment can deposit cash into his/her bank account by depositing cash at a store, without using an ATM. The store can use the cash that the store has received in trust from the user, as change in commercial transactions. The bank can provide the user with a cash depositing service without installing an ATM in the store. The bank can easily and inexpensively increase locations where the cash depositing service is provided to customers, as compared to the case of installing ATMs.

As described above, the cash depositing method and the cash depositing system according to the present disclosure are useful when a user deposits cash into an account at a financial institution, in a retail store without using an ATM.

## Claims

1. A cash depositing method for a user to deposit cash into an account of the user via a store, the method comprising:
causing a management server (100) managed by a management company to receive a request for depositing cash into the account, from a terminal device (200) operated by the user, issue a transaction code for specifying the account, and transmit the transaction code to the terminal device (200);
causing a cash handling apparatus (400) installed in the store to receive the transaction code that the user has received with the terminal device (200), recognize and count cash deposited by the user into the cash handling apparatus (400), and output a deposited amount of the cash; and
causing the management server (100) to
specify the account of the user and an account deposit amount to be deposited into the account, based on the transaction code and the deposited amount obtained in the cash handling apparatus (400), and
instruct a bank server (300) to perform account handling for transferring the account deposit amount from an account of the management company to the account of the user.

2. The cash depositing method according to claim 1 further comprising causing the bank server (300) to perform a process of transferring the account deposit amount from the account of the management company to the account of the user, based on the instruction received from the management server (100) .

3. The cash depositing method according to claim 1 or 2, wherein the transaction code is a two-dimensional code, and the cash handling apparatus (400) obtains the transaction code by reading the two-dimensional code displayed on a display unit of the terminal device (200).

4. The cash depositing method according to claim 1 or 2, wherein the terminal device (200) is a mobile terminal possessed by the user, and the cash handling apparatus (400) obtains the transaction code by communicating with the mobile terminal.

5. The cash depositing method according to any one of claims 1 to 3, wherein
the management server (100)
manages account deposit amounts, which have been obtained when a plurality of cash handling apparatuses (400) receive cash from users, in association with the accounts of the respective users,
calculates a total amount by summing up a plurality of account deposit amounts associated with the same account, and
instructs to perform the account handling for the total amount, such that the plurality of account deposit amounts are handled collectively by moving, in the one account handling, a fund equivalent to the total amount.

6. The cash depositing method according to claim 5, further comprising causing the management server (100) to obtain information indicating a time limit of execution of the account handling, wherein the management server (100) collectively handles the plurality of account deposit amounts having been obtained by the time limit.

7. A cash depositing system (1) for a user to deposit cash into an account of the user via a store, the system (1) comprising:
a cash handling apparatus (400) configured to receive a transaction code for specifying the account of the user, from a terminal device (200) operated by the user, recognize and count cash deposited by the user, and output a deposited amount of the cash; and
a management server (100) configured to
specify the account of the user and an account deposit amount to be deposited into the account, based on the transaction code and the deposited amount obtained from the cash handling apparatus (400), and
instruct a bank server (300) to perform account handling for transferring the account deposit amount from an account of a management company that provides the cash depositing system (1), to the account of the user.
